# EUROPEAN PATENT SPECIFICATION

(11) **EP 1 160 129 B1**
(45) Date of publication and mention of the grant of the patent: **22.09.2010**
(21) Application number: 00904020.5
(22) Date of filing: 18.02.2000
(51) Int. Cl.: B60Q 1/40

(54) **STEERING DEVICE OF RUNNING VEHICLE AND WHEEL TYPE HYDRAULIC SHOVEL WITH THE STEERING DEVICE**
LENKVORRICHTUNG FÜR RADFAHRZEUGE UND HYDRAULISCHE BAGGER MIT DIESER LENKVORRICHTUNG
LEVIER DE DIRECTION DE VEHICULE ET PELLE HYDRAULIQUE A ROUES DOTEE DE CE LEVIER DE DIRECTION

(30) Priority: 19.02.1999 JP 4212199
(43) Date of publication of application: 05.12.2001
(73) Proprietor: Hitachi Construction Machinery Co., Ltd., Bunkyo-ku Tokyo 112-0004 (JP)
(72) Inventor: OJIMA, Mitsugu, Tsuchiura-shi, Ibaraki 300-1176 (JP)
(74) Representative: Prins, Adrianus Willem
(86) International application number: PCT/JP2000/000916
(87) International publication number: WO 2000/048864

(56) References cited:
- DE-B- 1 008 133
- FR-A- 2 247 077
- JP-A- 7 125 638
- JP-A- 03 238 723
- JP-A- 07 125 638
- JP-A- 10 211 847
- US-A- 2 608 627
- US-A- 3 710 049

## Description

### TECHNICAL FIELD

The present invention relates to a steering device for a vehicle provided with a mechanism (blinker mechanism) that automatically cancels the blinker when the steering wheel is turned back and a hydraulic wheeled excavator having the steering device.

### BACKGROUND ART

Japanese Laid-Open Patent Publication No. H 7-125638, for instance, discloses the following device provided with a mechanism (a blinker mechanism) that automatically resets the blinker lever when the steering wheel is turned back after the blinker lever is operated. A cancel pin is screwed in at the boss of the steering wheel core bar linked to a steering shaft parallel to the steering shaft and the front end of the cancel pin is projected out into the lower space. In the space, a reverse cam pin is allowed to project out by interlocking with a blinker lever operation, and when the steering wheel is turned back, the cancel pin projecting out from the boss comes in contact with the reverse cam pin to press the reverse cam pin backward, thereby resetting the blinker lever at the neutral position. A steering device for a travelling vehicle according to the preamble of claim 1 is disclosed in US 3,710,049.

### DISCLOSURE OF THE INVENTION

In such a blinker mechanism, the reverse cam pin is pressed backward by the cancel pin only when the steering wheel is turned back, which means that the cancel pin and the reverse cam pin must sustain a specific positional relationship allowing for a very limited degree of flexibility with regard to their positional relationship. Thus, when the method whereby the cancel pin is screwed into the boss of the steering wheel is adopted as in the device disclosed in the publication, it sometimes becomes difficult to set the cancel pin in correspondence to the position of the reverse cam pin, depending upon the shape (dimensions) of the boss. In particular, since the steering wheel in a travelling vehicle manufactured to export specifications is replaced with one satisfying the standards (e.g., the ISO standards) adopted in the export destination which include a boss formed in any of various shapes, it is extremely difficult to correctly set the cancel pin in conjunction with all the different shapes adopted at the boss. In addition, while it is desirable to use a steering wheel with a small diameter to secure the forward visual field and especially the diagonally downward visual field during an operation in a working vehicle such as a hydraulic wheeled excavator, it is difficult to use a steering wheel that assures an ample visual field since the mounting position of the cancel pin is restricted by the shape of the boss. Furthermore, each time an operator replaces the steering wheel with a new one for his preference within the allowable range stipulated in the standards, the cancel pin must be screwed into the boss of the new steering wheel, and thus, the number of work steps and the number of assembly steps increase. Since the cancel pin is made to project out to downward from the boss, a great deal of space is required, resulting in poor space efficiency.

An object of the present invention is to provide a steering device for a travelling vehicle that allows any steering wheel to be selected for use regardless of the shape of the boss at the steering wheel and achieves more efficient utilization of space and a hydraulic wheeled excavator having the steering device.

In order to achieve the object described above, the steering device for a travelling vehicle according to the present invention comprises a steering wheel that drives and rotates a steering shaft, a blinker lever that is operated before a right turn and a left turn, a holding mechanism that holds the blinker lever at a right-turn position, a left-turn position or a neutral position and a rod-shaped member that projects from the steering shaft along the radial direction and drives the holding mechanism when the steering wheel having been operated to make a right turn or a left turn is turned back to reset the blinker lever to the neutral position, wherein the rod-shaped member is constituted of a screw interlocked with the steering shaft.

This structure allows any steering wheel to be used in the vehicle regardless of the shape of the boss without having to mount a special component for canceling the blinker at the boss of the steering wheel.

Rod-shaped member minimizes the space taken up by the blinker canceling mechanism.

Rod-shaped member may include a collar that governs the length over which the screw projects out. Such a rod-shaped member achieves the desired length over which the rod-shaped member projects simply by adjusting the length of the screw itself (the length of the screw toward its head) or changing the collar, to improve the versatility.

The hydraulic wheeled excavator having a steering device according to the present invention comprises a steering wheel that drives and rotates a steering shaft, a blinker lever that is operated before a right turn and a left turn, a holding mechanism that holds the blinker lever at a right-turn position, a left-turn position or a neutral position and a rod-shaped member that projects from the steering shaft along the radial direction and drives the holding mechanism when the steering wheel having been operated to make a right turn or a left turn is turned back to reset the blinker lever to the neutral position, wherein the rod-shaped member is constituted of a screw interlocked in the steering shaft.

This structure minimizes the diameter of the steering wheel to improve the visibility during operation.

### BRIEF DESCRIPTION OF THE DRAWINGS

FIG. 1 is a longitudinal sectional view of the steering device in an embodiment of the present invention;
FIG. 2 is a sectional view taken along line II-II in FIG. 1;
FIG. 3 is an enlarged view of area a in FIG. 1;
FIG. 4 illustrates an operation of the steering device in the embodiment of the present invention;
FIG. 5 shows an example of a variation of the steering device in the embodiment of the present invention which does not appertein to the current invention; and
FIG. 6 is a side elevation of a hydraulic wheeled excavator that may adopt the present invention.

### BEST MODE FOR CARRYING OUT THE INVENTION

The following is an explanation of an embodiment of the present invention, given in reference to the drawings.

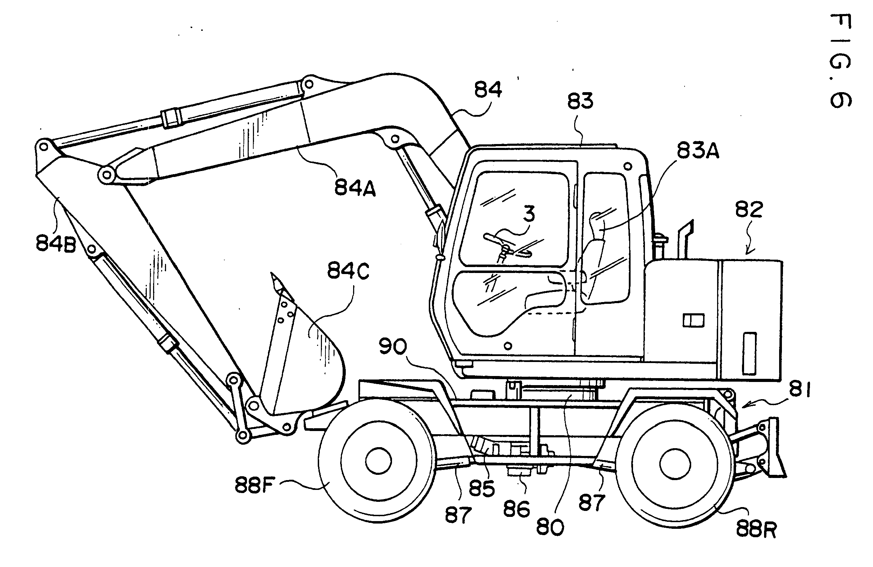

FIG. 6 is a side elevation of the hydraulic wheeled excavator in which the present invention is adopted. As shown in FIG. 6, the hydraulic wheeled excavator is provided with a lower traveling body 81 and an upper swiveling body 82 that is revolvably connected to the top of the lower traveling body 81 via a swiveling device 80. At the upper swiveling body 82, a working front attachment 84 that includes a boom 84A, an arm 84B and a bucket 84C, and an operator cab 83 are provided, with a steering wheel 3 provided in front of an operator seat 83A. The lower traveling body 81 includes a chassis frame 90, a hydraulic motor for travelling 85, a transmission 86, a propeller shaft 87 and tires 88F and 88R, and the drive force originating from the propeller shaft 87 is communicated to the tires 88F and 88R via an axle (not shown).

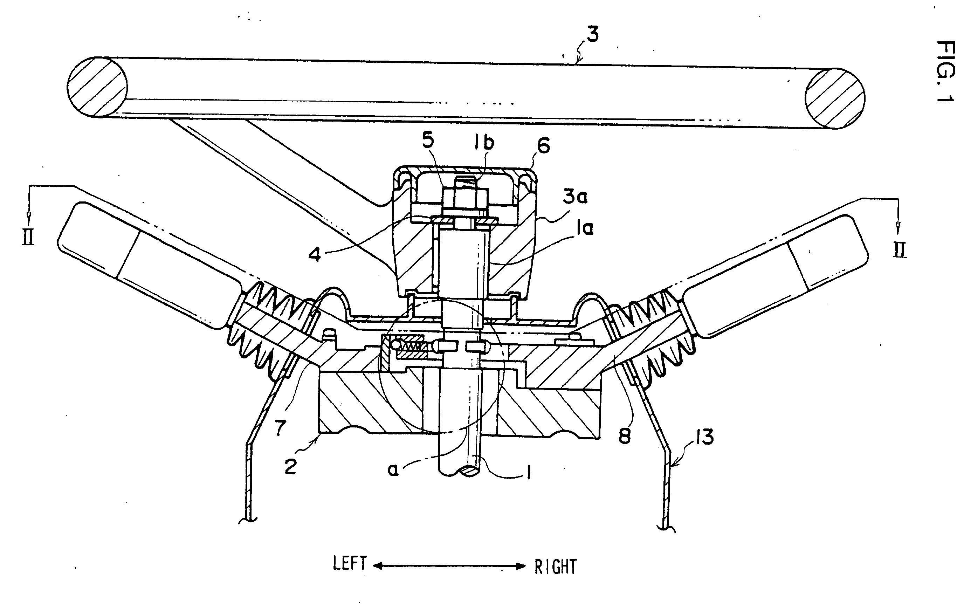

FIG. 1 is a longitudinal sectional view of the steering device in the embodiment of the present invention which is employed in the hydraulic wheeled excavator. As shown in FIG. 1, the front end of a steering shaft 1 reaches an upper position via a column 2 at which a blinker mechanism and the like are mounted and a dust proof cover 13. The front end of the shaft 1 is tapered with its tapered portion 1a inserted and fitted in a boss 3a of a steering wheel 3. A nut 5 is interlocked at screw portion 1b constituting the front end of the shaft 1 via a washer 4, thereby linking the steering wheel 3 to the steering shaft 1. It is to be noted that a cap 6 is provided at the front end of the boss 3a.

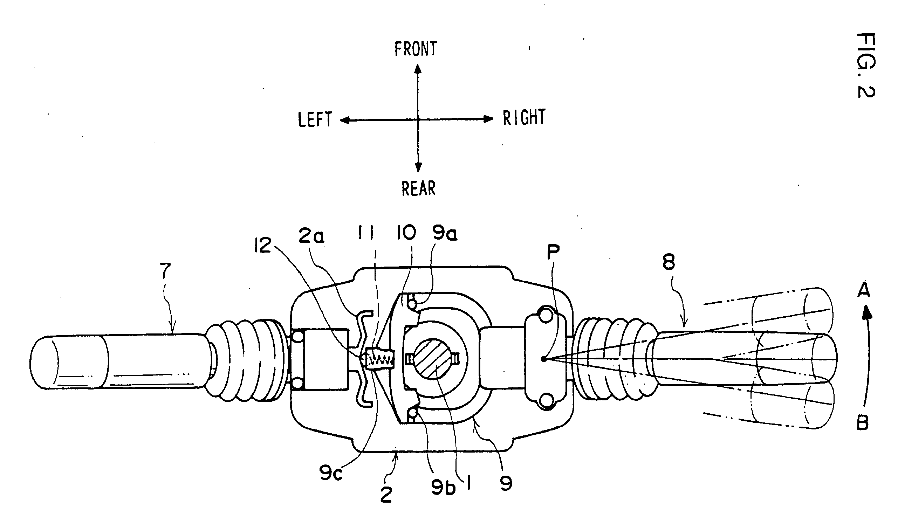

FIG. 2 is a sectional view taken along line II-II in FIG. 1. As shown in FIG. 2, a wiper lever 7 and a blinker lever 8 are provided on the left side and the right side at the column 2 respectively. While the wiper lever 7 is secured at the position shown in the figure, the blinker lever 8 is connected so as to allow it to move from the neutral position in the figure to position A (the left-turn position) and to position B (the right-turn position) around a rotational support point p. A ring member 9 which rotates as part of the blinker lever 8 is fixed at the blinker lever 8. Two projections 9a and 9b are provided, one at the front and the other at the rear of the ring member 9, and a canceling member 10 that rotates over the ring member 9 as described later is provided to the left of the projections 9a and 9b.

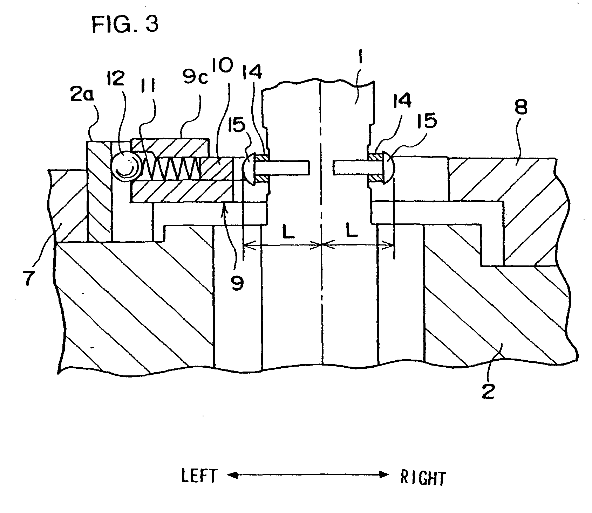

FIG. 3 is an enlarged view of area "a" in FIG. 1. As shown in FIGS. 2 and 3, a retaining guide 9c is provided at the left end of the ring member 9 as an integrated part, and an end of the canceling member 10 slidably provided on the ring member 9 is inserted at the retaining guide 9c. A spring 11 is provided via a ball 12, in the gap between the end of the canceling member 10 and a guide plate 2a secured to the column 2, and the canceling member 10 is pressed toward the projections (to the right) at all times by the force applied by the spring 11. When an outward force is applied via a round head screw 15 as detailed later, the canceling member 10 is moved toward the guide plate 2a against the force applied by the spring 11. The guide plate 2a includes recesses formed at positions corresponding to the neutral position, position A (left turn) and position B (right turn) assumed by the blinker lever 8 shown in FIG. 2, and the position of the lever 8 is set with the spring force of the spring 11 by guiding the ball 12 to one of the recesses. It is to be noted that an electrical switch (not shown) which is switched by interlocking with the operations of the blinker lever 8 and the wiper lever 7 is provided at the lower portion of the column 2, and the dust proof cover 13 is provided at the exterior of the column 2 in order to protect the contact point and the like of the switch.

Next, the features of the embodiment are explained. As shown in FIG. 3, two sets of round head screws 15 each having a round head are screwed via collars 14 achieving a predetermined height to face opposite each other at the steering shaft 1, and the distance from the center of the shaft 1 to the head of each round head screw 15 is adjusted to a predetermined value L. The round head screws 15 are positioned so that their heads are set at the same height as the canceling member 10. It is to be noted that the heads of the round head screws 15 are set in between the upper and lower end surfaces of the ring member 9 in the embodiment. When the steering shaft 1 is rotated to make a right or left turn and then turned back, the heads of the round head screw 15 comes in contact with the canceling member 10 to push the canceling member 10, i.e., to rotate the canceling member 10 around the projection 9a or 9b, as described below.

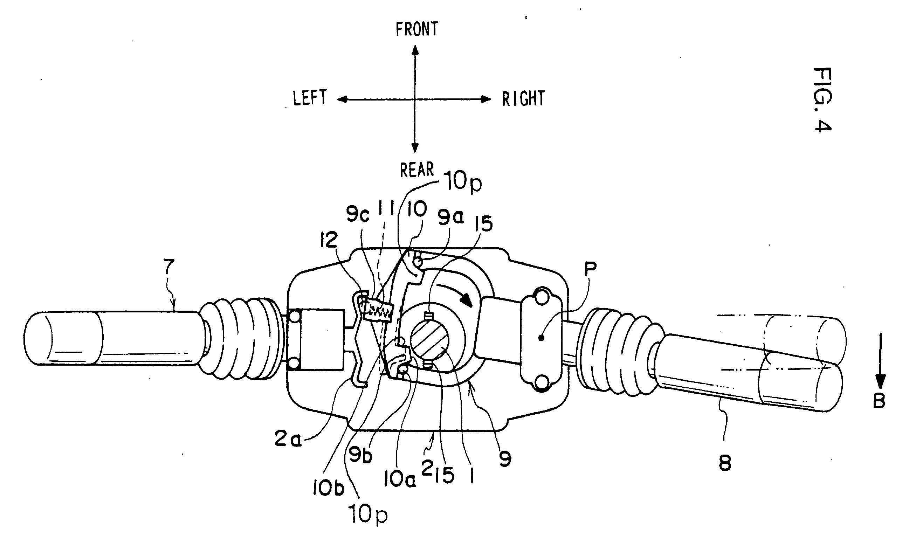

FIG. 4 illustrates a state in which the blinker lever 8 having been operated along direction B (for a right turn) is held at the right-turn position. When the blinker lever 8 is operated along direction B, the ball 12 rolls over the guide plate 2a while contracting the spring 11, and the blinker lever 8, the ring member 9 and the canceling member 10 rotate together around the rotational support point p to achieve the state shown in FIG. 4. As the steering wheel 3 is operated to the right in this state, the steering shaft 1 rotates to the right (as indicated by the arrow) in response and, as a result, the head of a round head screw 15 comes in contact with an end surface 10a of a projecting portion 10p of the canceling member 10. Then, the head of the round head screw 15 slides while maintaining contact with the end surface 10a of the projecting portion 10p, which causes the canceling member 10 to be pushed outward with the projection 9a constituting the support point (see the dotted line), against the force applied by the spring 11 to prevent the rotational force originating from the steering shaft 1 from being communicated to the blinker lever 8. Once the round head screw 15 passes the projecting portion 10p, the canceling member 10 returns to the original position (indicated by the solid line), and subsequently, a similar operation is repeated every time a round head screw 15 passes.

If, on the other hand, the steering wheel 3 is turned back (reversed) to the left from the state shown in FIG. 4, the steering shaft 1 rotates in the counter-clockwise direction. At this point, the head of one of the round head screws 15, which comes into contact with an end surface 10b of the base of the projecting portion 10p at the canceling member 10 becomes hooked, and, as a result, the rotation of the round head screw 15 causes the canceling member 10 to move backward along the counter-clockwise direction with respect to the steering shaft 1, i.e., toward the neutral position shown in FIG. 2. Since the reversing force imparted by the round head screw 15 is also applied to the projection 9b via the canceling member 10, the ring member 9 and the blinker lever 8, too, are rotated along the counter-clockwise direction around the support point p at the same time to recover the neutral position shown in FIG. 2. It is to be noted that a similar operation is performed if the steering wheel 3 is reversed while the blinker lever 8 having been operated along direction A is held at the left-turn position.

By interlocking the round head screws 15 with the steering shaft 1 and placing the head of a round head screw 15 in contact with the canceling member 10 provided to cancel the blinker during a return rotation of the steering shaft 1 to complete a right turn, as described above, the blinker lever 8 is automatically restored to the neutral position in the embodiment. Thus, it is not necessary to provide a blinker cancel pin which extends along the axis of the steering shaft 1, at the boss 3a of the steering wheel 3, which allows any type of steering wheel 3 to be mounted regardless of the shape of the boss 3a, free of any restrictions that would otherwise be imposed by the cancel pin. As a result, the diameter of the steering wheel 3 can be minimized to improve visibility during operation. In addition, since the degree to which the heads of the round head screws 15 project out can be adjusted by varying the thickness of the collars 14, the present invention can be adopted with ease, even when a different shape is assumed by the canceling member 10. Furthermore, since only the steering shaft 1 is provided between the lower surface of the boss 3a and the upper surface of the column 2, the dust proof cover 13 can be set closer to the shaft 1 to achieve better dust proofing. Since the round head screws 15 alone project out from the steering shaft 1 at positions corresponding to the canceling member 10, the space required to achieve blinker cancellation can be minimized to achieve miniaturization of the device.

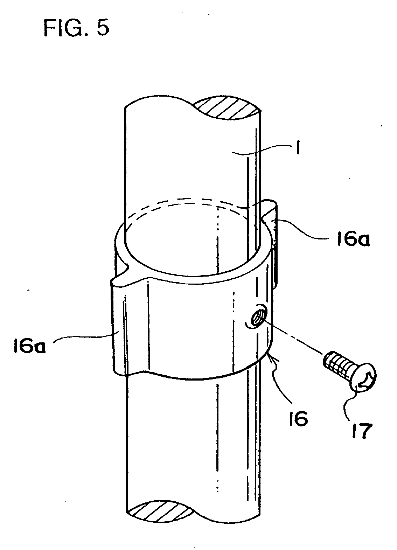

It is to be noted that the present invention, which is characterized in that a rod-shaped members, 14 and 15 projecting out along the radial direction are provided at the steering shaft 1 to reset the blinker lever 8 to the neutral position by placing the projecting member 14 and 15 in contact with the canceling member 10 provided for blinker cancellation, is not limited to the example achieved in the embodiment and may be adopted in various other modes. For instance, while the round head screws 15 are screwed in at the shaft 1 in the embodiment, pins instead of round head screws may be fixed in place. In addition, while the degree by which the head of the round head screw 15 projects out is defined by the collar 14 in the embodiment, the degree by which the round head screw 15 projects out may be adjusted simply by changing the length of the round head screw 15 itself (the length of the head-side of the screw) or by changing the degree to which the round head screw 15 is screwed in without using the collar 14. Moreover, as an exemple which does not appertein to the current invention, a collar 16 having a projection 16a may be fitted at the shaft 1 with the position of the collar 16 fixed through a bolt 17, to push the canceling member 10 with the projection 16a, as shown in FIG. 5.

### INDUSTRIAL APPLICABILITY

While an explanation is given above on an example in which the steering device is adopted in the hydraulic wheeled excavator, the steering device according to the present invention may be adopted in other vehicles in a similar manner.

## Claims

1. A steering device for a travelling vehicle comprising:
steering wheel (3) that drives and rotates a steering shaft (1);
a blinker lever (8) that is operated before a right turn and a left turn;
a holding mechanism (2a, 9-12) that holds said blinker lever (8) at a right-turn position, a left-turn position or a neutral position; and
a rod-shaped member (14, 15) that projects from said steering shaft (1) along a radial direction and drives said holding mechanism (2a, 9-12) when said steering wheel (3) having been operated to make a right turn or a left turn is turned back to reset said blinker lever (8) to the neutral position, **characterised in that** said rod-shaped member is (14, 15) constituted of a screw (15) interlocked in said steering shaft (1).

2. A steering device for a travelling vehicle according to claim 1 wherein:
said rod-shaped member (14, 15) further includes a collar (14) that regulates a length by which said screw (15) projects out.

3. A steering device for a travelling vehicle according to claim 1 or 2, wherein:
a front end of said rod shaped member (14, 15) constitutes a curved surface.

## Patentansprüche

1. Lenkvorrichtung für ein Radfahrzeug mit:
einem Lenkrad (3), welches eine Lenkwelle (1) steuert und dreht,
einem Blinkerhebel (8), der vor einem Rechtsabbiegen oder Linksabbiegen betätigt wird,
einem Haltemechanismus (2a, 9-12), der den Blinkerhebel (8) in der Rechtsabbiegestellung, der Linksabbiegestellung oder der neutralen Stellung hält, und
einem stiftförmigen Glied (14, 15), welches von der Lenkwelle (1) in Radialrichtung absteht und den Haltemechanismus (2a, 9-12) steuert, wenn das Lenkrad (3), welches betätigt wurde um nach rechts oder nach links abzubiegen, in die Ausgangslage zurückgedreht wird, um den Blinkerhebel (8) in die neutrale Position zurückzuversetzen, **dadurch gekennzeichnet, dass** das stiftförmige Element (14, 15) aus einer Schraube (15) besteht, die in der Lenkwelle (1) verriegelt ist.

2. Lenkvorrichtung für ein Radfahrzeug nach Anspruch 1,
wobei das stiftförmige Element (14, 15) ferner einen Kragen (14) aufweist, der bestimmt mit welcher Länge die Schraube (15) nach außen vorsteht.

3. Lenkvorrichtung für ein Radfahrzeug nach Anspruch 1 oder 2,
wobei das Stirnende des stiftförmigen Elements (14, 15) eine gekrümmte Oberfläche aufweist.

## Revendications

1. Dispositif de pilotage pour véhicule en marche, comprenant :
un volant (3) qui entraîne et fait tourner un arbre de direction (1) ;
une manette (3) de clignotant qui est actionnée avant un changement de direction vers la droite ou vers la gauche ;
un mécanisme de retenue (2a, 9-12) qui retient ladite manette (8) de clignotant dans une position de changement de direction vers la droite, une position de changement de direction vers la gauche ou une position neutre ; et
un élément en forme de tige (14, 15) qui dépasse dudit arbre de direction (1) dans une direction radiale et qui entraîne ledit mécanisme de retenue (2a, 9-12) lorsque, ledit volant (3) ayant été manoeuvré pour procéder à un changement de direction vers la droite ou un changement de direction vers la gauche, on le fait revenir en sens inverse pour remettre ladite manette (8) de clignotant dans la position neutre, **caractérisé en ce que** ledit élément en forme de tige (14, 15) est constitué par une vis (15) vissée dans ledit arbre de direction (1).

2. Dispositif de pilotage pour véhicule en marche selon la revendication 1, dans lequel :
ledit élément en forme de tige (14, 15) comporte en outre un collier (14) qui détermine une longueur de dépassement de ladite vis (15).

3. Dispositif de pilotage pour véhicule en marche selon la revendication 1 ou 2, dans lequel :
une extrémité avant dudit élément en forme de tige (14, 15) constitue une surface courbe.
